# EUROPEAN PATENT SPECIFICATION

(11) **EP 0 790 749 B1**
(45) Date of publication and mention of the grant of the patent: **02.04.2003**
(21) Application number: 96109187.3
(22) Date of filing: 07.06.1996
(51) Int. Cl.: H04Q 7/32

(54) **Infrared interface for data communications**
Infrarotschnittstelle für Datenübertragung
Interface infrarouge pour transmission de données

(30) Priority: 06.06.1995 US 471798
(43) Date of publication of application: 20.08.1997
(73) Proprietor: TEXAS INSTRUMENTS INCORPORATED, Dallas Texas 75265 (US)
(72) Inventor: Watts, Lavaughn F., Temple, TX. 76502 (US)
(74) Representative: Degwert, Hartmut, Dipl.-Phys.

(56) References cited:
- EP-A- 0 585 030
- EP-A- 0 622 935
- EP-A- 0 665 655
- WO-A-94/12938

## Description

### Field of the Invention

The present invention relates to the field of mobile telecommunications. More specifically, the present invention relates to a battery pack module or a module, which comprise an infrared interface for data communications between a portable computer and a cellular telephone or between a portable computer, a cellular telephone and a cellular telephone network.

In this context, reference is made to EP-A-0 585 030, which discloses a radio telephone system comprising a transceiver unit and an external device, such as a handset, computer or telecopier, in wireless infrared signal communication with the transceiver unit. The information transmitted between the transceiver unit and the external device is transmitted as infrared digital pulses.

A portable telephone apparatus having option circuits in a battery pack is known from EP-A-0 622 935. In the portable telephone apparatus selectively operable in a portable or in an on-board mode, an option circuit is built in a chargeable battery pack for adding an extra function to a telephone. A plurality of keys are arranged on the telephone and operable to cause the telephone and option circuit to interchange speech signals and control signals and to start and stop operating.

WO-A-94/12938 discloses a handheld computer which contains an LCD display having a digitizing surface to allow pen input. Internal storage takes several forms, such as a large flash ROM area, battery-backed up RAM and an optional harddisc drive. The computer can readily communicate with other sources, particularly to a host desktop computer, to allow automated synchronization of information between the host and the handheld system. When the handheld computer is in cradle and actively connected to the host computer, automatic capture of updated data in the host computer is performed.

A cellular phone with infrared interface in the battery pack is known from EP-A-0 665 655. That document falls within the terms of Art. 54(3) EPC, and its content is only relevant to the question of novelty of the present application. The known cellular phone has, in addition to an antenna, speaker and microphone, a device interface capable of transmitting electronic information between the cellular phone and an electronic device, such as a computer or modem, when the device is physically connected to the cellular phone. The cellular phone also has a battery pack. The battery pack has, in addition to a battery for powering the cellular phone, an infrared port for transmitting infrared information between the cellular phone and an electronic device with infrared capability. The infrared port is connected to an infrared converter, which is connected to the device interface. The infrared converter converts electronic information to infrared information for transmission between the cellular phone and the device over the infrared port.

### BRIEF DESCRIPTION OF THE DRAWINGS

The novel features believed characteristic of the invention are set forth in the appended claims. The invention itself, however, as well as other features and advantages thereof, will be best understood by reference to the detailed description which follows, read in conjunction with the accompanying drawings, wherein:
FIG. 1 illustrates a basic prior art cellular telephone network.
FIG. 2 is a block diagram of the cellular telephone network of FIG. 1.
FIG. 3 is a block diagram of a prior art cellular telephone data communication system.
FIG. 4 is a diagram illustrating a manner in which the data signal to be transmitted by the cellular telephone data communication system of FIG. 3 is modified to provide an error detection and correction capability.
FIG. 5 is a flow chart showing the control functions of the microprocessor for a transmitting interface of the cellular telephone data communication system shown in FIG. 3.
FIG. 6 is a flow chart showing the data processing function of the microprocessor for a transmitting interface of the cellular telephone data communication system shown in FIG. 3.
FIG. 7 illustrates a cellular telephone network according to a preferred embodiment of the invention.
FIG. 8 is a block diagram of a cellular telephone data communication system according to a preferred embodiment of the invention.
FIG. 9 is a block diagram of an infrared interface according to a preferred embodiment of the invention.
FIG. 10 is a block diagram of an infrared interface according to another embodiment of the invention.
FIG. 11 illustrates a cellular phone having a proprietary connector.
FIG. 12 is a side view of the cellular phone of FIG. 11 with the battery pack removed.
FIG. 13 is a side view of a new intelligent module incorporating a battery pack infrared interface and proprietary connector.
FIG. 14 is a side view of the cellular phone of FIG. 12 combined with the new intelligent module of FIG. 13.
FIG. 15 is a side view of the cellular phone of FIG. 12 combined with a new intelligent module, according to another embodiment of the invention.
FIG. 16 is a block diagram of a cellular telephone data communication system according to another embodiment of the invention.

### BACKGROUND OF THE INVENTION

Modern computer and telephone system technology have made the transmission of computer originated data over conventional telephone lines a commonplace event. In such systems, a computer is connected through a suitable interface, such as an RS 232 interface, to provide serial data signals to a conventional wire line modem. With modems of this type, when signal quality changes induce errors in the modem data stream, an ARQ (Automatic Repeat Request) of packet repeat scheme is conventionally employed for controlling these errors. This requires a complete repeat of numerous bytes of data until such time as all of the bytes of data in the packet are received correctly. However, the low frequency of signal quality change induced errors in a wire line environment makes this an efficient method of controlling error.

Current wire line modem technology provides a scrambled modulated signal to the telephone line which will not be interpreted by telephone equipment as a valid switch command. To accomplish this, conventional wire line modems are provided with a scrambler circuit which assures that the modulated signal is continuously changing. This changing signal is used by the modem PLL (Phase Locked Loop) circuitry to provide synchronization, for without this scrambled modulated signal, a static condition of the modem will cause the PLL to loose synchronization and the telephone equipment to interpret the static signal as a switch command.

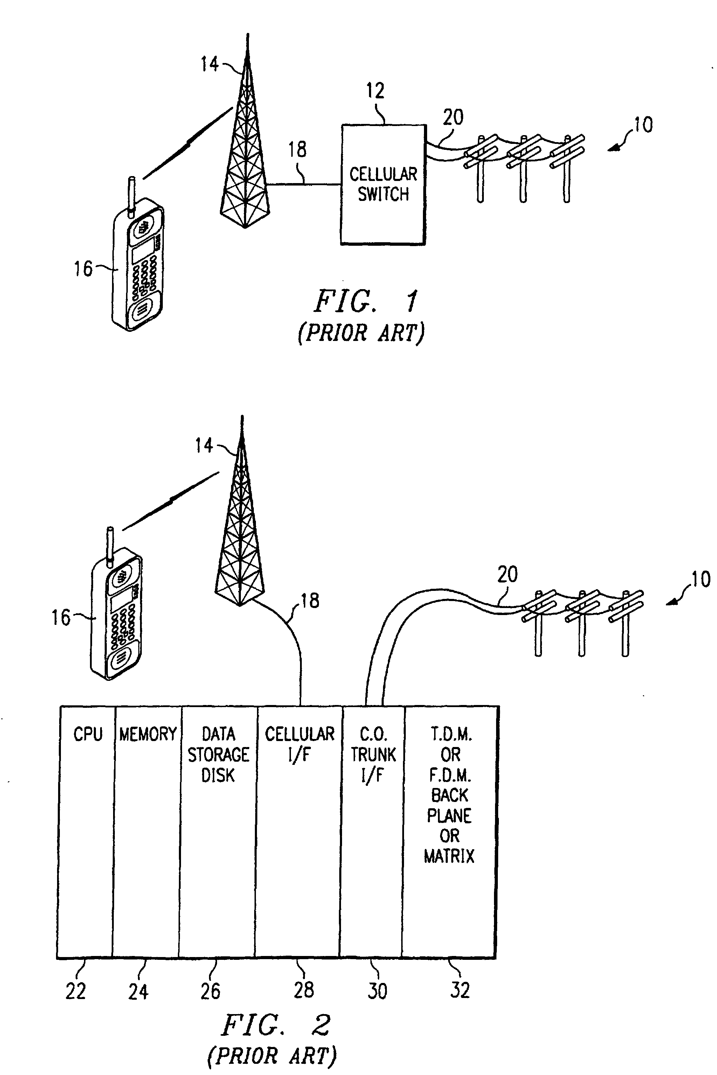

Conventional telephone modems have operated effectively to interface computers with a telephone system for data transmission, but these modems do not operate effectively to provide data transmission over conventional cellular telephone equipment. FIG. 1 illustrates a prior art cellular network 10 having a mobile cellular telephone exchange (MTX) switch 12 connected to a transceiver and antenna 14. A transceiver is located in each cell of the cellular network and communicates with the MTX to effect transmission and reception of signals to and from the mobile telephone 16. The transceiver is typically connected to the cellular switch 12 via a leased or dedicated network line 18. The cellular switch 12 is typically connected to the land-based destinations via telephone network 20. FIG. 2 is a block diagram of the telephone network of FIG. 1. The hierarchical architecture of cellular switch 12 includes a central processing unit 22, memory 24, data storage disk 26, cellular interface 28, central office trunk interface 30 and a backplane or switching matrix 32.

In the cellular telephone environment, numerous errors are induced into data transmission because of the problems associated with cellular telephone communication. Echo and fading problems cause multiple bit errors in the data stream, and such problems occur frequently with a moving vehicle. For example, the transmitted signal may hit a building or other obstacle and bounce erratically or fade as the vehicle is shielded from the cell antenna. This high frequency of error in the data stream transmitted by cellular transmission renders the error correction protocol present in conventional wire line modems unsuitable for cellular use. Errors occur so frequently in a cellular environment that the number of repeat requests becomes large and data transmission efficiency is reduced below an acceptable amount. In some instances, errors may occur to often that a correct packet may never be received. Thus, the error correction protocol present in conventional telephone modems is unable to cope with problems presented in a cellular environment.

One solution to the problem of transmitting data in the cellular telephone environment is discussed in U.S. Patent No. 4,697,281 to O'Sullivan, herein incorporated by reference. The patent describes a cellular telephone data communication system and method involving the use of a mobile data processing interface and a cooperating static data processing interface to effectively transmit data over a cellular telephone system. Each data processing interface includes a processor which operates in the transmitting mode to add an error control correction data format to data received from an external data source. The data is divided into packets and provided to a modem which is uniquely operated to eliminate the action of the modem scramble system and to remain active in spite of a carrier signal loss. The modem is deactivated or disconnected by a disconnect signal from the processor, and when carrier signal loss occurs, this disconnect signal is provided only after the lapse of a delay period without the resumption of the carrier signal. The error control correction data format, causes a receiver to evaluate the received data for error and to retransmit an acknowledgment signal for each acceptable packet of received data. In the absence of an acknowledgment signal, the processor will again provide a data packet to the modem for retransmission. Also, the processor will determine the frequency of error in the received data from the acknowledgment signals and subsequently adjust the data packet size in accordance with this error frequency.

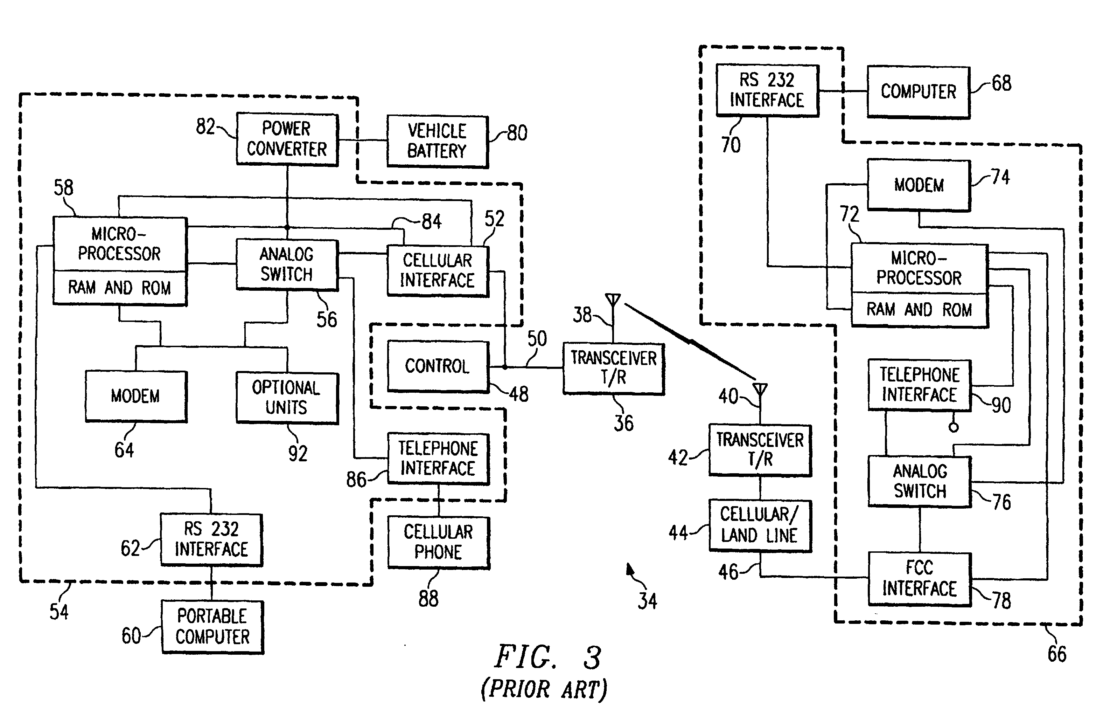

More specifically, a system for transmitting data over a cellular environment as taught by U.S. Patent No. 4,697,281 is indicated generally at 34 in FIG. 3. A vehicle mounted mobile cellular telephone system conventionally includes a transceiver 36 which transmits or receives voice signals in the radio frequency range by means of an antenna 38. Voice signals transmitted by the antenna 38 are received by an antenna 40 connected to a transceiver 42 located in a specific cell area of the cellular telephone network. The transceiver 42 is connected to the cellular land line equipment 44 which is operative to transmit the received signal over conventional telephone lines 46. Voice signals from the telephone lines 46 may also be transmitted by the transceiver 42 and the antenna 40 back to the antenna 38 to and through the transceiver 36 of the cellular telephone unit. The transceiver 36 is controlled by a cellular telephone system control unit 48 which is connected to the transceiver by means of a cellular telephone bus 50. The cellular bus 50 may be one which meets the AMPS (Advanced Mobile Phone Service) specifications determined by the Federal Communications Commission. These specifications indicate that control signals between the transceiver 36 and the control unit 48 should be on an eight bit parallel party line bus and that the analog signals should be a differential signal with a nominal -20dbV level using a 24 wire interconnecting cable. A very complete description of the AMPS system is provided in "The Bell System Technical Journal", 1979, Vol. 58, No. 1, pp 1-269.

A cellular interface 52 renders the remainder of the mobile data programming interface 54 compatible with the cellular bus 50 of a particular cellular telephone system. For example, with AMPS compatible cellular telephones, the cellular interface 52 would consist of an eight bit parallel I/O, port party line drivers and receivers, operational amplifiers providing differential driving and receiving analog conversion between the -20dbV signal on the cellular bus and the defined levels required by an analog switch and condition system 56. Cellular interfaces of this type are known, commercially available items, as exemplified by cellular interfaces sold by Motorola Corporation of Schaumberg, Illinois or Oki of Japan.

The analog switch and conditioning system 56 is implemented using currently known switching technology. The system may incorporate CMOS analog switches operative in response to microprocessor generated control signals to switch the state of signal processing operational amplifiers. Basically, this analog switch and condition system operates to selectively connect various components of the portable cellular unit to the cellular interface 52. Microprocessor 58 provides control functions for the cellular interface 52 and analog switch and conditioning system 56 as well as for other portions of mobile data programming interface 54. Microprocessor 58 may be a conventional 8/16 bit microprocessor, such as the Intel 8088 manufactured by Intel Corporation. The microprocessor includes random access (RAM) and read only (ROM) memory storage systems which contain the control and data error programs necessary to adapt computer data for cellular telephone transmission. The use of a separate microprocessor in the portable cellular unit frees the limited memory which is normally available in portable computers for other uses.

A serial data stream is provided to the microprocessor 58 from an external portable computer 60 by means of a conventional RS 232 interface 62 included within the mobile data programming interface. Data received by the microprocessor from the portable computer 60 is provided with unique error correction signal information before being provided to a modem 64.

The modem 64 may be one of a number of conventional modems used for telephone wire line transmission which has test mode capabilities for deactivating certain modem functions. A particular commercially available modem suitable of use as the modem 64 is the AMI 3530 modem manufactured by Gould Advanced Semiconductors of 3800 Hemstead Road, Santa Clara, California. Modems of this type, when employed for data transmission over conventional telephone lines, will disconnect immediately in response to a carrier loss. When such modems sense a channel blanked status occasioned by a carrier loss, they provide a "break bit" output and disconnect. Also, for normal use such modems include a scrambler system which assures that the data modulated signal is continuously changing, and this signal change is used by the modem PLL circuitry to provide synchronization. A non-scrambled modulated signal may be interpreted by the telephone operating equipment as a valid switch command, and this is particularly true when the modem is in the static condition. Normally this scrambler system in the modem prevents this tactic condition where loss of synchronization by the PLL or the interpretation of the static signal as a switch command is most likely to occur. However, modems such as the AMI 3530 incorporate a test mode of operation wherein the modem is prevented from disconnecting in response to carrier loss and wherein the modem scrambler can be deactivated or defeated. Normally, such modems would be incapable of effective operation in this test mode, but it is the availability of this test mode that renders modems of this type suitable for use as the modem 64.

The data stream from the microprocessor 58, including error correction data from the microprocessor, is transmitted by the modem 64 through the analog switch 56 and cellular interface 52 to the transceiver 36. This data is then transmitted as a radio frequency signal by the antenna 38 to the antenna 40, where it is converted by the transceiver 42 and cellular land line equipment 44 to a signal suitable for transmission over conventional telephone lines 46. These telephone lines connect the signal to the second portion of the cellular transmission system of the present invention which is a static data programming interface 66 operative to pass data signals to and from the telephone line 46. The data signals which are passed to the telephone line originate at a host computer 68 which cooperates with the static data programming interface in a manner similar to the operation of the portable computer 60 with the mobile data programming interface 54.

For transmission purposes, the computer 68 provides data to an RS 232 interface 70 which in turn provides the data to a microprocessor 72. This microprocessor preferably is identical in construction and function the microprocessor 58, and is programmed with the same control and error correction and other programming. The microprocessor 72 adds error correction and control signal to the data provided from the RS 232 interface 70 and then provides the modified data stream to a modem 74. The modem 74 is identical in construction and function to the modem 64, and operates to transmit the data stream by means of an analog switch and conditioning system 76 to a conventional FCC interface 78. The FCC interface 70 provides the data stream to the telephone lines 46 where they are sent by means of the cellular land line equipment 44 to the transceiver 42. The data is then transmitted to the transceiver 36 which provides it by means of the cellular interface 52 and the analog switch 56 to the microprocessor 58. The microprocessor 58 then removes the error correction and control signals from the data stream and provides the data through the RS 232 interface 62 for display and use by the portable computer 60.

The static data programming interface 66 receives data transmitted over the cellular telephone line, and this incoming data from the FCC interface 78 is fed by means of the analog switch 76 to the microprocessor 72. Here the error and control signals are removed from the data and the data is then displayed and/or used by the computer 68. It will be noted that the static data programming interface 66 and the mobile data programming interface 54 are substantially identical in structure and operation with the exceptions that the static data programming interface 66 is connected to telephone lines by an FCC interface while the mobile data programming interface 54 is connected to a cellular telephone system by a cellular interface. Also, the mobile data programming interface 54 may be powered from a vehicle battery 80 which operates through a conventional power converter 82 to provide power to a power bus 84. This power bus 84 is connected to provide power to all of the operating units in the mobile data programming interface 54 and may also be connected to provide power to the portable computer 60. The static programming interface 66 includes a similar power bus, not shown, which is connected to any conventional power supply such as the power supply in a building containing the computer 68.

Although the mobile data programming interface 54 and the static data programming interface 66 must communicate with one another to effectively transmit data over a cellular telephone system, both of these units can also transmit and receive conventional cellular telephone audio transmissions. The mobile data programming interface 54 includes a telephone interface 86 which may be connected to an external telephone-like handset 88 and which operates in a conventional manner through the analog switch and conditioning system 56 and cellular interface 52 to transmit and receive audio communications by means of the transceiver 36. In a similar manner, the static data programming interface 66 includes a telephone interface 90 which may be connected to an external telephone to transmit and receive audio signals through the telephone interface 90, the analog switch 76 and the FCC interface 78. Thus, both the mobile data programming interface 54 and the static data programming interface 66 are adapted for normal audio communication. Like the mobile data programming interface 54, the static data programming interface 66 includes a control and display section (not shown) which is connected to the microprocessor 72 and which operates to receive data from which the microprocessor has extracted the control and error signals.

Both the mobile data programming interface 54 and the static data programming interface 66 will operate with optional equipment, and an optional equipment block 92 is shown for the mobile data programming interface in FIG. 3. This optional equipment might include other modems, a microphone which may be employed to provide audio communication in place of the cellular phone 88, and various memory and encrypting devices known to the art to accomplish automatic dialing similar functions.

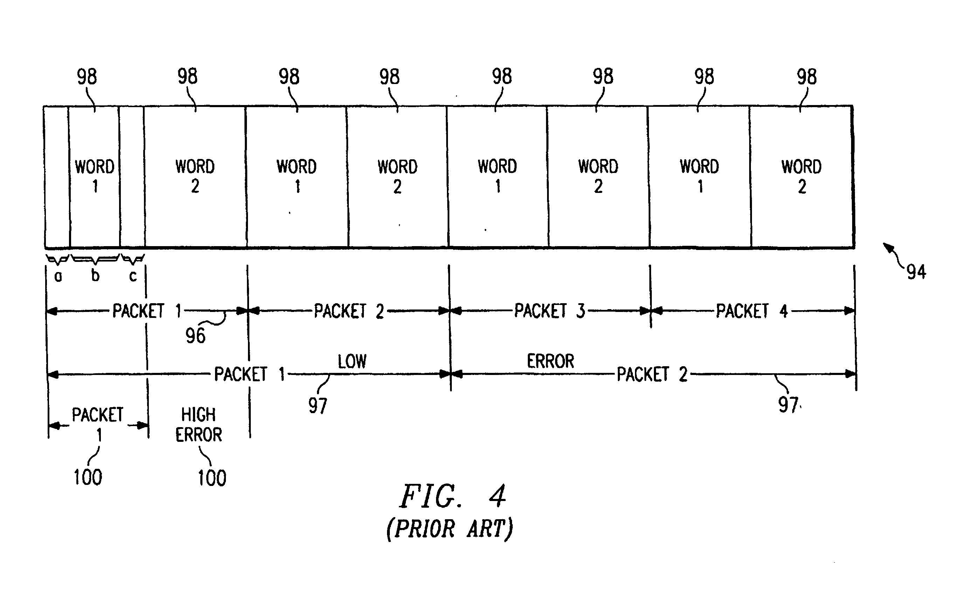

Before considering in detail the operation of the mobile data programming interface 54 and the static data programming interface 66, it is necessary to understand the manner in which the microprocessor 58 and modem 64 and the microprocessor 72 and modem 74 cooperate to adapt a data signal for cellular telephone transmission. With reference to FIG. 4, there is diagrammatically illustrated a data document 94 to be transmitted which has originated with the portable computer 60. This data document 94 is divided, by the microprocessor 58, into a plurality of packets 96, and for purposes of illustration in FIG. 4, four packets of equal size are shown. In actuality, a document would be divided into many more packets which would not necessarily be of equal size. Further, each packet is divided by the microprocessor 58 into a plurality of words, and for purposes of illustration in FIG. 4, each packet 96 includes two words 98. Again, a packet would normally contain many more than two words, but two are shown for purposes of illustration. Each word in a packet includes three bytes a, b, and c, and the microprocessor 58 will determine whether the word is a control word or a data word. When the word is a data word, then bytes a and b will be data bytes, while byte c is a forward error correction (FEC) byte. Conversely, if the word is a control word, byte a will be the control word signifier, byte b will be the control word descriptor and again, byte c will be the FEC byte. Thus, it will be noted that byte c is always the FEC byte for both data and control words.

Data words are always synchronous with the packet stream, while control words may or may not be asynchronous to data. An example of an asynchronous control word would be an acknowledgement word, while an example of a synchronous control word would be the packet "end" word, while asynchronous control words do not affect the CRC of a packet. An exemplary form for an asynchronous control word, for example, the acknowledgement word, would be a control word signifier for byte a, the packet number for byte b, and byte c, the FEC byte. On the other hand, an example of a synchronous control word, such as the packet "end word", would be a control word signifier for byte a, a CRC byte for byte b and the FEC byte as byte c. A control word synchronous to the packet indicates that byte b is a data rather than a control byte.

The FEC byte causes the receiving microprocessor to check the data bytes in a data word and determine whether or not an error exists in that word. If an error is detected, the microprocessor 72 will use the FEC byte to correct the word at reception. However, if a predetermined error level in any word within a packet is exceeded, an acknowledgement signal for the packet will not be transmitted back to the transmitting microprocessor, thereby causing this microprocessor to retransmit the entire packet. For example, the predetermined error level could be a specified number of bits per word, for example 2 bits. Correction would occur for any error of 2 bits or less, but an error in excess of 2 bits would result in no acknowledgment being transmitted for the packet.

The microprocessor unit 72 operates in a manner identical to that of the microprocessor 58 to form data packets with control and data words to transmit data provided from the computer 68, and the microprocessor 58 operates in the receiving mode to check the data byte and pass acceptable data to the portable computer 60. If the transmitting microprocessor 72 or 58 does not receive acknowledgement signals back from the receiving microprocessor, correction, or other procedures to be described, are initiated by the transmitting microprocessor.

Referring back to FIG. 4, if the receiving microprocessor, in this example the microprocessor 72, examines a received data word and discovers an error in excess of the predetermined error level, it will not transmit a packet acknowledgement signal to the microprocessor 58. The transmitting microprocessor 58 will, by the lack of acknowledgment signals, be informed of excess error in a data packet 96, and will operate to retransmit this packet until the data is received in a substantially error-free or at least a correctable condition. To this point, the transmission of the data package has occurred in much the same manner as does the transmission of a data stream over a telephone wire. However, in the telephone wire environment, the error frequency is not as great as that experienced with cellular telephone transmission systems, and consequently, a uniform packet repeat process for error correction is acceptable for wire line data transmission. This is not the case for cellular telephone transmission, because the high error frequency might well cause multiple packet repeats to such an extend that no transmission would ever occur. Consequently, the transmitting microprocessor of the present invention is programmed with an error correction capability which involves a sliding packet size. This packet size is changed in accordance with transmission quality determined by the transmitting microprocessor on the basis of an evaluation of the error frequency in signals received from previously transmitted data. The receiving microprocessor transmits a data stream to the transmitting microprocessor from which this evaluation is made. The packet size is increased for a good transmission signal and decreased for a bad transmission signal, so that in a high error situation, the retransmitted packet is of minimum size. The transmitting microprocessor is continuously evaluating the number of errors in the data stream it receives from the receiving microprocessor, and is adjusting the packet size of subsequent transmissions in accordance with this evaluated error data. Thus, as illustrated by FIG. 4, the packet size 96 might be increased during transmission period by the transmitting microprocessor to a much larger packet size 97 when transmission errors are minimal, or, conversely, the transmitting microprocessor might decrease the packet size to a much smaller packet size 100 as transmission errors increase.

In the transmission mode, both the microprocessors 58 and 72 provide a sliding packet ARQ wherein the packet size changes or slides based on the transmission quality. In a high error situation, the packet size becomes smaller and the time required to repeat a packet containing error is lessened. Consequently, in a cellular transmission situation where errors are occurring frequently, a packet of reduced size containing corrected data may be received, while if the packet remained of greater size, numerous bytes of data would have to be retransmitted until all bytes of data in the packet are received correctly. This would reduce data transmission efficiency, or in extremely high error situations, prevent the reception of a correct packet.

The microprocessors 58 and 72 maintain the modems 64 and 74 on line in the event of a carrier signal loss during data transmission. As previously indicated, such a carrier transmission loss occurs when the vehicle bearing the mobile data programming interface 54 passes between cells in a cellular telephone system. The modems 64 and 74 are operated normally in the test mode or a similar mode which prevents the modem from automatically disconnecting in response to a carrier signal loss. Instead, the modem is not permitted to disconnect until it receives a disconnect signal from the respective microprocessor 58 or 72. This microprocessor, which has been sending or receiving data, senses the carrier signal loss when it receives a "break bit" from the associated modem, and therefore, the microprocessor recognizes a carrier loss and initiates a time delay period before permitting the modem to disconnect. Generally, the hand-off period between cells of a cellular telephone system causes less than a one-second carrier signal loss, and consequently, the delay initiated by the microprocessor in response to a carrier loss may be anywhere within the range of from two to seven seconds. This delay period is sufficient to permit reestablishment of the carrier signal when the loss of carrier is occasioned by travel between cells. By never allowing a carrier loss to cause modem disconnect during this predetermined time delay period, the time needed for the modem to reestablish data transmission after the carrier loss terminates is decreased, thereby improving overall efficiency. Thus, if the carrier loss terminates during the predetermined time period set by the microprocessor, modem disconnect does not occur. On the other hand, the microprocessor will instruct the modem to disconnect when the data transmission is ended by the microprocessor, when the cellular telephone call is completed, as sensed by the cellular interface 52 or the FCC interface 78 and transmitted to the microprocessor, or when the delay period set by the microprocessor expires.

The modems 64 and 74 are not only used in the test mode to disable the normal modem disconnect circuitry, but also are used in a mode which disables the modem scrambler circuitry. It is important for effective cellular data transmission to prevent the scrambler polynomial from increasing the number of bit errors received, for these additional errors further reduce the effectiveness of the error correction scheme. However, with the scrambler defeated, the synchronization of the modem PLL circuitry is no longer provided and the non-scrambled modulated signal may be interpreted by the telephone company equipment as a valid switch command. Both of these problems are solved by the cooperation between the modem and its associated microprocessor. Considering the microprocessor 58 to be the transmitting microprocessor, all data sent by the modem 64 is first presented to the modem by the microprocessor. The microprocessor is programmed to ensure that the data signal provided to the modem has enough changing signals to keep the modem PLL in synchronization and to prevent the telephone switching equipment from assuming the signal is a valid switching command. It must be recognized, however, that data is not always sent by the modem 70 in a continuous stream, and that the modem is often in a static condition. It is when the modem is in this static condition that the modem PLL may lose synchronization or that the telephone equipment may interpret the static condition as a switch command. Normally, the modem scrambler would prevent this static condition, but in the present circuit, the transmitting microprocessor knows when the last data byte was presented to the modem and what the transmission rate of the modem is. With this information, the microprocessor determines when the modem is in a static condition, and immediately initiates the presentation of a unique byte of data to the modem. This unique byte is repeatedly presented until data is again available for transmission, or in the alternative, until the modem is shut down. The characteristics of this unique byte, hereinafter known as the synch byte, are such that the bit stream is always changing, and the receiving modem recognizes this byte as a synch byte and not a valid data byte. These two conditions can be met by many different bytes, and the choice of which one to use is arbitrary.

Since the structure and operation of the mobile data programming interface 54 and the static data programming interface 66 are substantially the same, both operate in the same manner to either transmit or receive data.

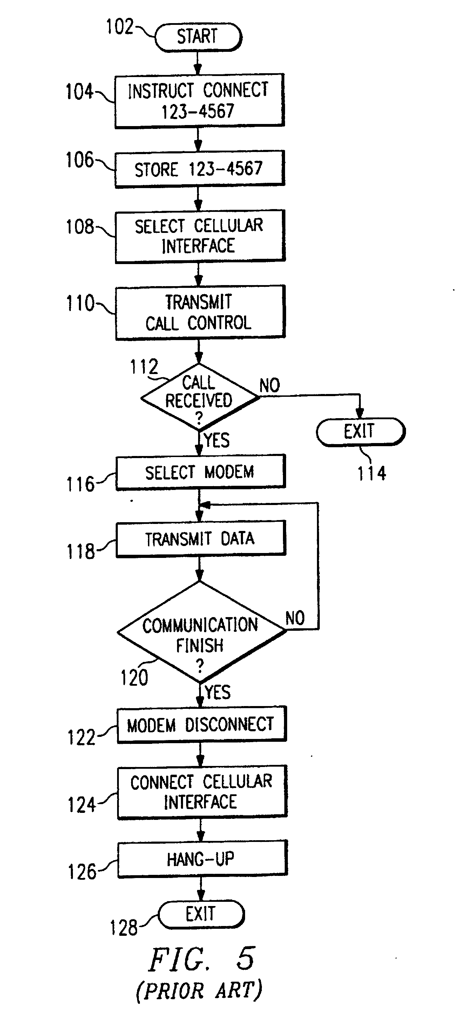

Referring now to FIG. 5, there is illustrated a flow chart including the basic process steps used by the microprocessor 58 in transmitting a data signal over the cellular telephone system. The coding of the process steps of this flow chart into the instructions suitable to control the microprocessor 58 will be understandable to one having ordinary skill in the art of programming (also illustrated in detail in the microfiche program appendixed to U.S. Patent No. 4,697,281). The flow chart of FIG. 5 begins at start block 102, and the microprocessor 58 is adapted to receive dialing instructions as indicated by block 104 which originate at the portable computer 60 or from some other source. These instructions command the microprocessor to connect the system to a designated telephone number (123-4567) and the received instructions are stored in the microprocessor as shown by block 106. In response to the instructions, the microprocessor then operates to cause the analog switch and conditioning system 56 to complete an instruction path to the cellular interface 52 as taught at 108. With this path completed, the microprocessor operates at 110 to transmit the stored call control signals to the cellular interface with the instructions to cause the cellular interface to send the eight bit parallel control signals required to dial the phone number 123-4567. The microprocessor then waits for the call to be answered, and if this does not occur, the NO branch is taken from the decision block 112 to block 114 to exit from the flow chart in FIG. 5. However, if the call is answered, the YES branch is taken from the decision block 112 to block 116, where the microprocessor 58 instructs the analog switch and conditioning system 56 to switch the signal path from the cellular interface to the modem 64. Subsequently, at block 118, the modem is instructed to transmit data received by the microprocessor.

The data transmission is monitored as indicated by the decision block 120. As long as data is being transmitted through the microprocessor 58, the NO branch of the decision block 120 takes the decision to the block 118 to continue the transmission of data. However, once data transmission is finished, the YES branch of the decision block 120 is taken to the modem disconnect block 122 where the microprocessor instructs the modem to terminate its function. Then the analog switch and conditioning system 56 is instructed, as indicated by the block 124, to disconnect the path between the modem and the cellular interface and to reconnect the microprocessor which, at 126, instructs the cellular interface to hang up the telephone and terminate the call before exiting at 128.

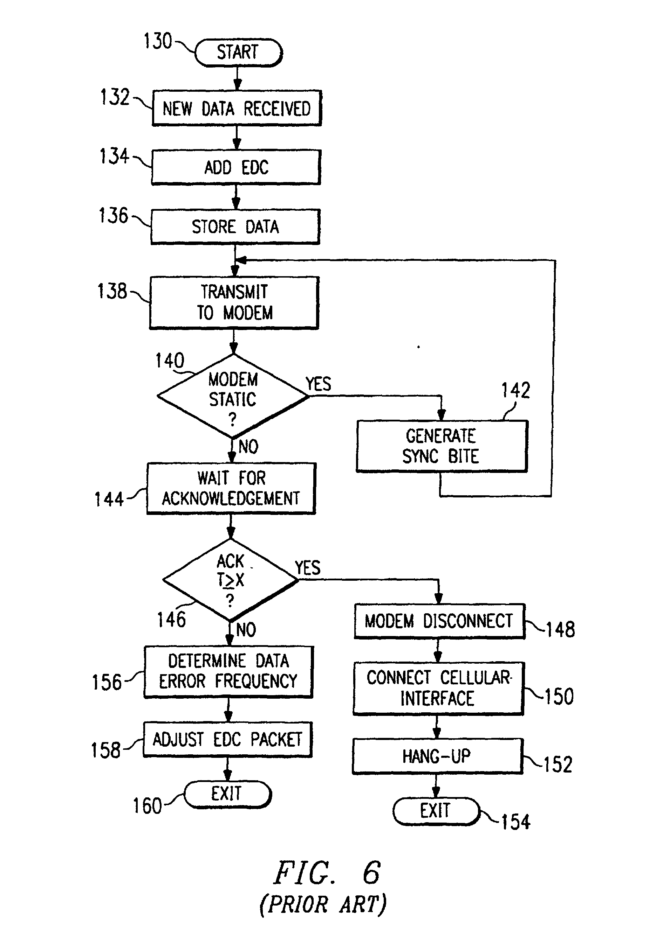

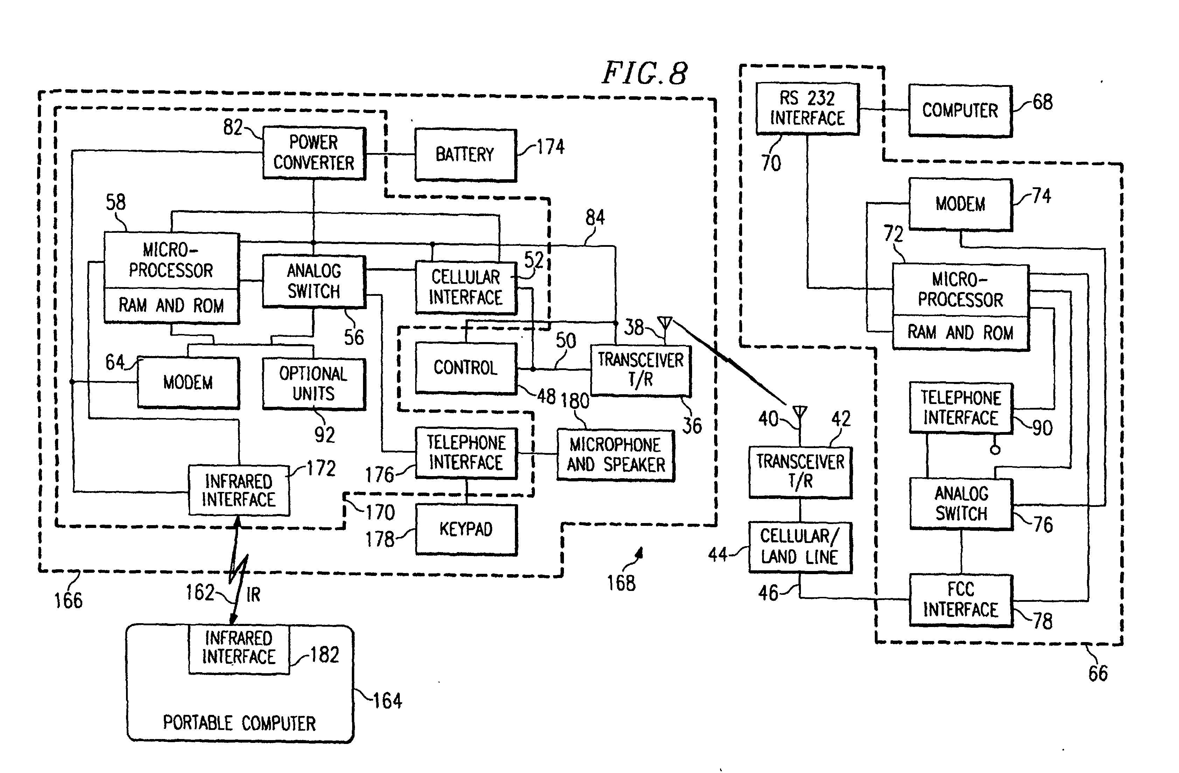

Referring now to FIG. 6, a flow diagram illustrates in detail the operation of the microprocessor 58 during the block shown at 118 in FIG. 5 when data transmission is occurring. Again, the coding of the process steps used by the microprocessor 58 into the instructions suitable to control the microprocessor will be understood by one having ordinary skill in the art (and illustrated in detail in the microfiche program appendixed to U.S. Patent No. 4,697,281).

Entering the flow chart at a start block 130, a data stream provided by the portable computer 60 through the RS 232 interface 62 is received by the microprocessor 58 as indicated by the block 132. Next, the data signal is modulated with the error detection and correction and other control bytes described in connection with FIG. 4, as illustrated by the block 134 and the modulated data stream is stored at 136. The data is then transmitted to the modem at 138, and the modem provides the data to the cellular interface for transmission. As previously indicated, the microprocessor provides the data to the modem in a modulated signal which has enough changing signals to keep the modem PLL in synchronization. However, during the operation of the modem, the microprocessor monitors the data and modem operation to make sure that the modem is not static. The microprocessor uses the transmission rate of the modem and the time when the last data byte was presented to determine when the modem is in a static condition, and as indicated by the decision block 140, when the modem is static, the YES line to the block 142 shows that a repetitive synch byte is generated which is transmitted to the modem.

When the modem is not in the static condition, the NO line from the decision block 140 to the block 144 indicates that the microprocessor waits for the receipt of acknowledgment signals from the receiving microprocessor 72 for each word and packet of data transmitted. In the event of a loss of carrier signals, the microprocessors 58 and 72 respond to a "break bit" from the modem and initiate a time clock before permitting modem disconnect. As indicated by the decision block 146, when the awaited carrier signals are totally missing for a time t which is equal to or greater than a predetermined time x, the YES line to a modem disconnect block 148 is followed. At this point, the same operation which has occurred with the blocks 122, 124, 126, and 128 in FIG. 5 occurs, and the modem is disconnected from the cellular interface. The cellular interface is reconnected to the microprocessor at 150 which instructs the cellular interface to perform a hang-up operation at 152 before exiting at 154.

On the other hand, if the time when no carrier signals are received is less than the predetermined delay time period x, then the NO line from the decision block 146 to a data error frequency determination block 156 becomes relevant. Here, the frequency of data errors at the receiving data microprocessor 72 is determined and employed at block 158 to adjust the EDC packet to provide larger or smaller packets in the manner described in connection with FIG 5. Then this portion of the program is exited at 160.

The operation of the microprocessors 58 and 72 during the reception of data, evaluation of data errors and transmission of acknowledgment signals has been described previously. Since this operation is similar to that which occurs with wire line and other data transmission systems, it will be readily understood by those having ordinary skill in the art and illustrated in detail in the microfiche program appendixed to U.S. Patent No. 4,697,281).

The portable computer 60 disclosed in U.S. Patent No. 4,697,281 is connected to the mobile data programming interface 54 via a cable connected to an RS 232 interface 62 in the mobile data programming interface 54. The cable or tethered connection is fine as long as there is little movement between the portable computer and the mobile data programming interface and as long as the cable does not interfere with movement of a cellular telephone user. The problems of mobility and portability become more accurate it when the cellular phone is a hand held or portable cellular unit. Mobility is inhibited since a user of the hand held or portable cellular telephone can only move up to the distance of the cable or tethered connection from the portable computer. Portability is inhibited since the cable or tethered connection must be removed and reattached each time the components are separated a distance greater than the cable or tethered connection. Additional problems include tripping over the cable or tethered connection, catching the cable or tether connection on furniture, cut cables or tethered connections and worn out cable connectors. Thus, while the invention of U.S. Patent No. 4,697,281 offers one solution to the problem of transmitting data in a cellular telephone environment, it fails to remedy mobility and portability problems caused by the cable or tethered connection between the cellular phone and a portable computer.

### SUMMARY OF THE INVENTION

The present invention provides a battery pack module as defined in claim 1 and a cellular telephone including such a battery pack. The present invention further provides a module as defined in claim 4 and a cellular telephone including such a module. In a preferred embodiment of the invention, the infrared interfaces comprise a microprocessor, with embedded ROM and RAM or external ROM and RAM, or a digital signal processor (DSP). The microprocessor also has a communications port that is commed and is connected to a universal asynchronous receiver (uART). While the uART is a serial uART in the present invention, it could just as easily be a parallel uART. The uART is also connected to a crystal SIR, which itself is connected to receive and transmit light emitting diodes (LEDs). The LEDs require a power manager (op amp) and transceiver TX/R (op amp) beta analog circuits and plugs coupled to the LEDs.

### DETAILED DESCRIPTION OF PREFERRED EMBODIMENTS

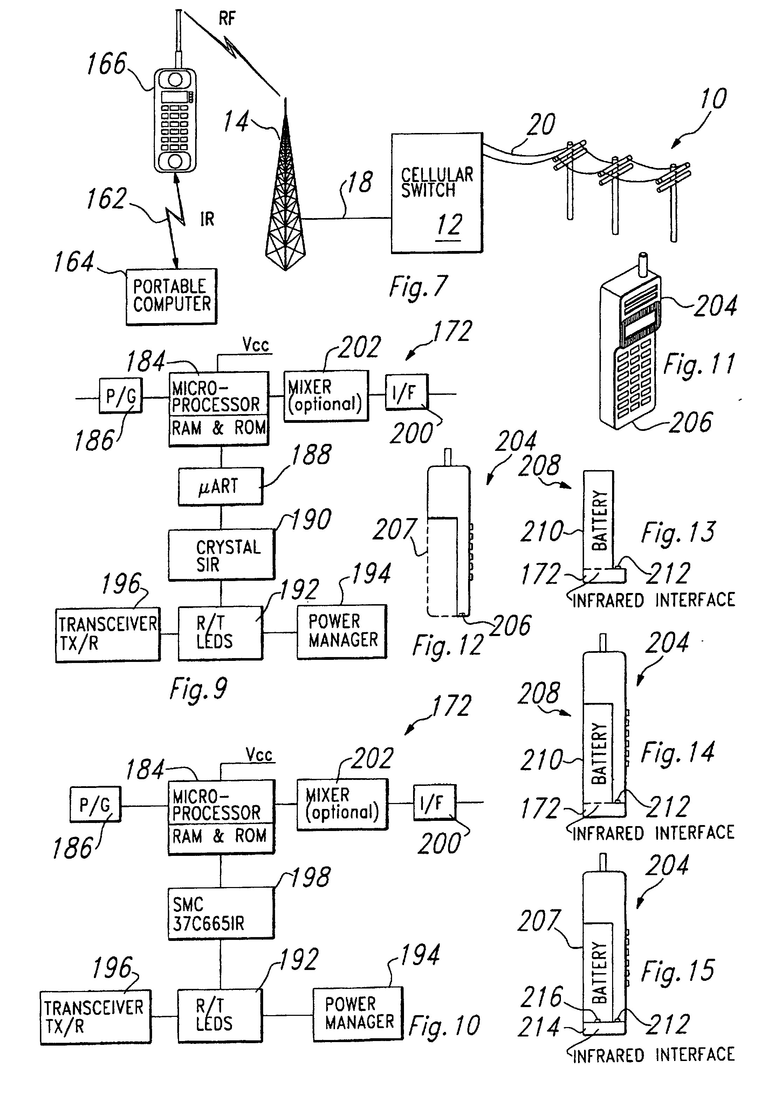

The present invention incorporates the use of infrared (IR) transmission 162 between a portable computer 164 and a cellular phone 166 to completely avoid the use of a cable or tethered connection for data communications between a portable computer and a cellular telephone, as illustrated in FIG. 7. A preferred embodiment of the invention for transmitting data over a cellular telephone network is indicated generally at 168 in FIG. 8. The cellular telephone, in this case a compact and self contained portable unit, conventionally includes a transceiver 36 which transmits or receives voice signals in the radio frequency range by means of an antenna 38. Voice signals transmitted by the antenna 38 are received by an antenna 40 connected to a transceiver 42 located in a specific cell area of the cellular telephone network. The transceiver 42 is connected to the cellular land line equipment 44 which is operative to transmit the received signal over conventional telephone lines 46. Voice signals from the telephone lines 46 may also be transmitted by the transceiver 42 and the antenna 40 back to the antenna 38 to and through the transceiver 36 of the cellular telephone unit. The transceiver 36 is controlled by a cellular telephone system control unit 48 which is connected to the transceiver 36 by means of a cellular telephone bus 50. Control signals between the transceiver 36 and the control unit 48 should be on an eight bit parallel party line bus and that the analog signals should be a differential signal with a nominal -20dbV level using a 24 wire interconnecting cable.

A cellular interface 52 renders the remainder of the mobile data programming interface 170 compatible with the cellular bus 50. For example, with AMPS compatible cellular telephones, the cellular interface 52 would consist of an eight bit parallel I/O, port party line drivers and receivers, operational amplifiers providing differential driving and receiving analog conversion between the -20dbV signal on the cellular bus and the defined levels required by an analog switch and condition system 56. Cellular interfaces of this type are known, commercially available items, as exemplified by cellular interfaces sold by Motorola Corporation of Schaumberg, Illinois or Oki of Japan.

The analog switch and conditioning system 56 is implemented using currently known switching technology. The system may incorporate CMOS analog switches operative in response to microprocessor generated control signals to switch the state of signal processing operational amplifiers. Basically, this analog switch and condition system 56 operates to selectively connect various components of the cellular phone to the cellular interface 52. Microprocessor 58 provides control functions for the cellular interface 52 and analog switch and conditioning system 56 as well as for other portions of the cellular phone. Microprocessor 58 may be a conventional 8/16 bit microprocessor, such as the Intel 8088 manufactured by Intel Corporation. The microprocessor includes random access (RAM) and read only (ROM) memory storage systems which contain the control and data error programs necessary to adapt computer data for cellular telephone transmission.

A serial data stream is provided to the microprocessor 58 from an external portable computer 164 by means of an infrared interface 172, to be described later in more detail, included within cellular telephone 166, according to a preferred embodiment of the invention. Data received by the microprocessor from the portable computer 164 is provided with unique error correction signal information.

The modem 64 may be one of a number of conventional modems used for telephone wire line transmission which has test mode capabilities for deactivating certain modem functions. A particular commercially available modem suitable of use as the modem 64 is the AMI 3530 modem manufactured by Gould Advanced Semiconductors of 3800 Hemstead Road, Santa Clara, California. Modems of this type, when employed for data transmission over conventional telephone lines, will disconnect immediately in response to a carrier loss. When such modems sense a channel blanked status occasioned by a carrier loss, they provide a "break bit" output and disconnect. Also, for normal use such modems include a scrambler system which assures that the data modulated signal is continuously changing, and this signal change is used by the modem PLL circuitry to provide synchronization. A non-scrambled modulated signal may be interpreted by the telephone operating equipment as a valid switch command, and this is particularly true when the modem is in the static condition. Normally this scrambler system in the modem prevents this tactic condition where loss of synchronization by the PLL or the interpretation of the static signal as a switch command is most likely to occur. However, modems such as the AMI 3530 incorporate a test mode of operation wherein the modem is prevented from disconnecting in response to carrier loss and wherein the modem scrambler can be deactivated or defeated. Normally, such modems would be incapable of effective operation in this test mode, but it is the availability of this test mode that renders modems of this type suitable for use as the modem 64.

The data stream from the microprocessor 58, including error correction data from the microprocessor, is transmitted by the modem 64 through the analog switch 56 and cellular interface 52 to the transceiver 36. This data is then transmitted as a radio frequency signal by the antenna 38 to the antenna 40, where it is converted by the transceiver 42 and cellular land line equipment 44 to a signal suitable for transmission over conventional telephone lines 46. These telephone lines connect the signal to the second portion of the cellular transmission system of the present invention which is a static data programming interface 66 operative to pass data signals to and from the telephone line 46. The data signals which are passed to the telephone line originate at a host computer 68.

For transmission purposes, the computer 68 provides data to an RS 232 interface 70 which in turn provides the data to a microprocessor 72. This microprocessor preferably is identical in construction and function to the microprocessor 58, and is programmed with the same control and error correction and other programming. The microprocessor 72 adds error correction and control signal to the data provided from the RS 232 interface, and then provides the modified data stream to a modem 74. The modem 74 preferably is identical in construction and function to the modem 64, and operates to transmit the data stream by means of an analog switch and conditioning system 76 to a conventional FCC interface 78. The FCC interface 78 provides the data stream to the telephone lines 46 where they are sent by means of the cellular land line equipment 44 to the transceiver 42. The data is then transmitted to the transceiver 36 which provides it by means of the cellular interface 52 and the analog switch 56 to the microprocessor 58. The microprocessor 58 then removes the error correction and control signals from the data stream and provides the data through the infrared interface 172 for display and use by the portable computer 164. Portable computer 164 may be a notebook computer having a monitor and a keyboard.

The static data programming interface 66 receives data transmitted over the cellular telephone line, and this incoming data from the FCC interface 78 is fed by means of the analog switch 76 to the microprocessor 72. Here the error and control signals are removed from the data and the data is then displayed and/or used by the computer 68. It will be noted that the static data programming interface 66 and the mobile data programming interface 170 are similar in structure and operation with the exceptions that the static data programming interface is connected to a computer via a cable through an RS 232 interface while the mobile data programming interface utilizes an infrared connection to couple it to the portable computer. Additional differences are that the static data programming interface is connected to telephone lines by an FCC interface while the mobile data programming interface is connected to a cellular telephone system by a cellular interface. The cellular telephone 166 may be powered from a battery 174 (or a battery substitute-power supply) which operates through a conventional power converter 82 to provide power to a power bus 84. This power bus 84 is connected to provide power to all of the operating units in the cellular telephone 166. The static programming interface 66 includes a similar power bus, not shown, which is connected to any conventional power supply such as the power supply in a building containing the computer 68.

Although the mobile data programming interface 170 and the static data programming interface 66 must communicate with one another to effectively transmit data over a cellular telephone system, both of these units can also transmit and receive conventional cellular telephone audio transmissions. The mobile data programming interface 170 includes a telephone interface 176 connected to a keypad 178 and a microphone and speaker 180, which operate in a conventional manner through the analog switch and conditioning system 56 and cellular interface 52 to transmit and receive audio communications by means of the transceiver 36. In a similar manner, the static data programming interface 66 includes a telephone interface 90 which may be connected to an external telephone to transmit and receive audio signals through the telephone interface, the analog switch 76 and the FCC interface 78. Thus, both the mobile data programming interface 166 and the static data programming interface 66 are adapted for normal audio communication. Like the mobile data programming interface, the static data programming interface includes a control and display section (not shown) which is connected to the microprocessor 72 and which operates to receive data from which the microprocessor has extracted the control and error signals.

Both the mobile data programming interface 170 and the static data programming interface 66 will operate with optional equipment, and an optional equipment block 92 is shown for the mobile data programming interface in FIG. 8. This optional equipment might include other modems and various memory and encrypting devices known to the art to accomplish automatic dialing similar functions.

The Background of the Invention contains a detailed description of operation of static data programming interface 66 and mobile data programming interface 54, including the manner in which the microprocessor 58 and modem 64 and the microprocessor 72 and modem 74 cooperate to adapt a data signal for cellular telephone transmission.

In the present invention, an infrared interface 172 replaces the RS 232 interface 62 in the mobile data programming interface 54 of FIG. 3, and the cellular telephone 166 is a self-contained and compact unit (versus the multi-component unit of FIG. 3) having a keypad 178 and microphone and speaker 180 (instead of the cellular phone 88 of FIG. 3) connected to telephone interface 176. An infrared interface 182, substantially identical to infrared interface 172, is located in the portable computer 164.

FIG. 9 is a block diagram of infrared interface 172, according to a preferred embodiment of the invention. The infrared interface includes a microprocessor 184, such as a Zialog Z8 or Hitachi H8 microprocessor, with embedded ROM and RAM or external ROM and RAM, or a digital signal processor (DSP) with ROM and RAM or a DSP on the disk bus as an auxiliary processor that transfers data back and forth to the DSP. Assuming that a Z8 microprocessor is used, power grid logic 186 is connected to the microprocessor and is used to start the Z8. The Z8 has a communications port that is commed and is connected to a universal asynchronous receiver (uART) 188. While uART 188 is a serial uART in the present invention, it could just as easily be a parallel uART. UART 188 is connected to a crystal SIR 190. One example of an acceptable crystal SIR is an 1830 crystal SIR chip. Crystal SIR 190 is connected to receive and transmit light emitting diodes (LEDs) 192. The LEDs 192 also require a power manager (op amp) 194 and transceiver TX/R (op amp) beta analog circuits 196 and plugs coupled to the LEDs. Alternatively, uART 188 and crystal SIR 190 can be replaced with an SMC 37C665IR chip 198, as shown in FIG. 10.

Referring again to FIG. 9, an interface 200 connects microprocessor 184 to microprocessor 58 (shown in FIG. 8) of the mobile data interface 170 of cellular phone 166. And while interface 200 is a digital-to-analog (D/A) interface in the present invention, a digital-to-digital (D/D) or analog-to-digital (A/D) interface could be substituted for the digital-to analog interface, depending upon the desired application. Optional mixer 202 facilitates the mixing of signals going across the interface so that different media can go across the interface at the same time.

Infrared interface 172 can be integrated into the electrical design of a new cellular telephone, or it can be added as an intelligent module to existing cellular telephones having proprietary connectors. FIG. 11 illustrates an existing cellular telephone 204 having a proprietary connector 206, such as made by ERICSON or NOKIA. FIG. 12 shows an enlarged side view of cellular phone 204 with its battery pack 207 removed. In FIG. 13, a new intelligent module 208 incorporating a battery pack 210, infrared interface 172 and proprietary connector 212, is shown. In FIG. 14, intelligent module 208 replaces the original battery pack. Interface 200 now connects to microprocessor 58 via the proprietary connector. Incorporating infrared interface 172 into the intelligent module 206 alleviates the need for a redesign of the cellular telephone.

An alternative to replacing battery pack 207 would be to add a small clip on new intelligent module 214 (identical to intelligent module 208) that includes a pass-through port 216 to receive power from battery pack 207, as shown in FIG 15.

Returning to FIG. 8, while infrared interface 172 is incorporated into cellular telephone 166, infrared interface 182 is incorporated into portable computer 164. The design of infrared interface 182 is substantially the same as the design previously discussed and shown in FIGs. 9 and 10 for infrared interface 172. Similarly, infrared interface 182 would replace an RS232 interface in portable computer 60 as infrared interface 172 did with cellular phone 166. The only substantial difference being that interface 200 is typically an analog-to-analog interface.

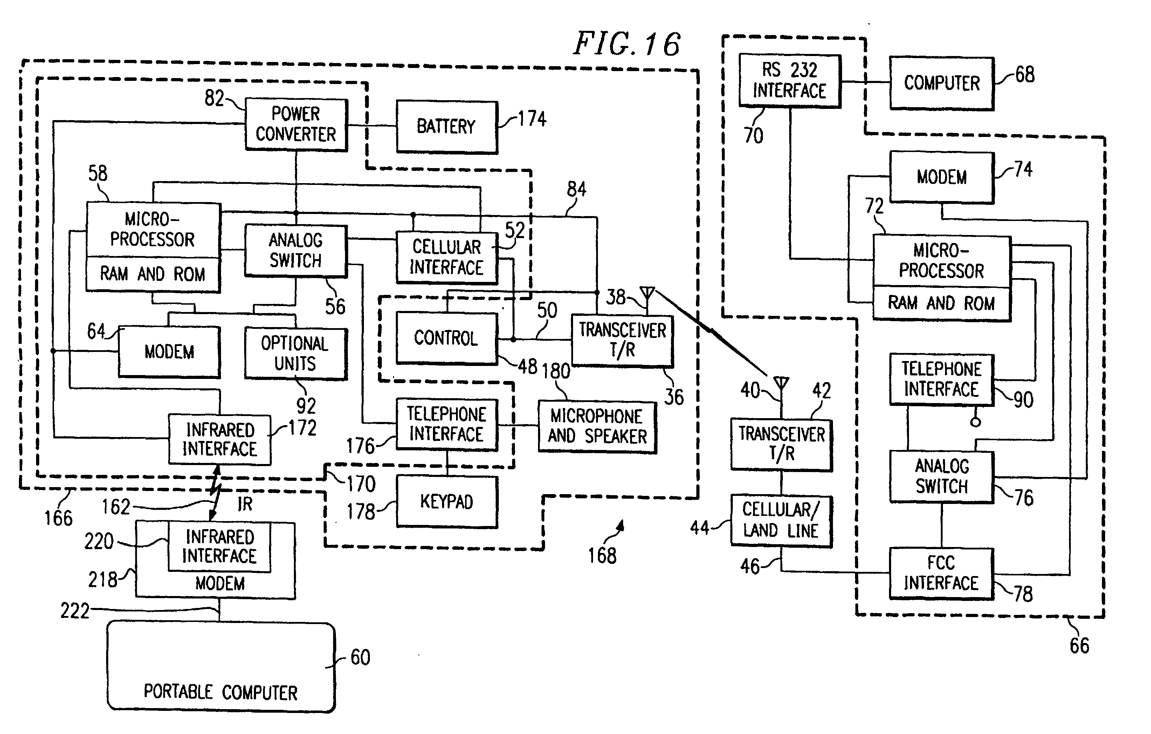

A cellular phone 166 can also be used with a portable computer 60 not having an infrared interface 182 using a modem 218 incorporating an infrared interface 220, as illustrated in FIG. 16. Infrared interface 220 is substantially the same as infrared interface 182. In this case, a cable 222 would be required from the modem 218 to the portable computer 60. While not as desirable as an infrared interface in the portable computer, modem 218 would none the less facilitate mobility greater than what presently exists.

And while the present invention has been concerned primarily with analog data communication between portable computer 164, cellular phone 166, and static data interface 66, data transmission from portable computer 164 across the IR network to cellular phone 166 can be of multiple types. One type is data that needs to be transferred just to the intelligence within cellular phone 166, i.e., phone control or PDA or PIN type operations such as phone number, name, address, calendar, appointment, etc with the information being bidirectional. Another type is digital data being transferred across the IR network directed to phone control, i.e., dial a number followed by digital data transmitted across the telephone digitally using one of the new protocols such GSM or DAM or analogwise by using the modem part of the phone to convert digital to analog for transmission. As a result, modems 64 and 74 and analog switches 66 and 76 are bypassed during digital data communications and may be ommitted in embodiments of the invention requiring only digital communications.

The present invention also facilitates simultaneous (full duplex) voice and data communication. Data communication between portable computer 164 and cellular phone 166 can be simultaneous with voice communication between cellular phone 166 and static data interface 66. The data transfer might include calendar changes, appointments, names or changes to the functions of the buttons of cellular phone 166.

While several implementations of preferred embodiments of the present invention have been shown and described, various modifications and alternate embodiments will occur to those skilled in the art.

## Claims

1. A battery pack module for a telephone comprising a battery pack (210) and an infrared interface (172) coupled to said battery pack (210), in which the infrared interface (172) comprises: an infrared transceiver, a processor (184) coupled to said infrared transceiver, and an interface (200) coupling a proprietary connector (212) to said processor (184).

2. The battery pack module of claim 1, wherein said interface (200) coupling said processor (184) to said proprietary connector (212) is digital-to-analog.

3. The battery pack module of claim 1, wherein said interface (200) coupling said processor (184) to said proprietary connector (212) is digital-to-digital.

4. A module for attachment to a telephone (204), comprising:
an infrared transceiver;
a processor (184) coupled to said infrared transceiver;
an interface (200) for coupling a proprietary connector (206) on said telephone (204) to said processor (184); and
means (216) for coupling the module (214) to a power supply (207) in said telephone.

5. A cellular telephone comprising a radio frequency (RF) transceiver (36), a microprocessor (58) coupled to said transceiver, a telephone interface (176) coupled to said microprocessor, a keypad (178) coupled to said telephone interface (176), a microphone and speaker (180) coupled to said telephone interface (176), and a battery pack module (208) removably coupled to said cellular telephone (204), said battery pack module further comprising: a battery pack (210) and an infrared interface (172) coupled to said battery pack (210), in which the infrared interface (172) comprises: an infrared transceiver, a processor (184) coupled to said infrared transceiver, and an interface (200) coupling a proprietary connector (212) to said processor (184).

6. A cellular telephone comprising a radio frequency (RF) transceiver (36), a microprocessor (58) coupled to said transceiver, a battery pack (207) removably coupled to said cellular telephone (204) for providing power to said microprocessor (58), a telephone interface (176) coupled to said microprocessor, a keypad (178) coupled to said telephone interface (176), a microphone and speaker (180) coupled to said telephone interface (176), and further comprising a module removably coupled to said telephone (204), said module comprising: an infrared transceiver; a processor (184) coupled to said infrared transceiver; an interface (200) for coupling a proprietary connector (206) on said telephone (204) to said processor (184); and means (216) for coupling power from said battery (207) to said processor (184).

7. The cellular telephone of claim 5, wherein said battery pack (210) provides power to said microprocessor (58).

8. The cellular telephone of claim 5 or claim 6, wherein said processor (184) is a microprocessor.

9. The cellular telephone of claim 8, wherein ROM and RAM are embedded in said microprocessor (184).

10. The cellular telephone of claim 8, wherein ROM and RAM are external to said microprocessor (184).

11. The cellular telephone of claim 5 or claim 6, wherein said processor (184) is a digital signal processor.

12. The cellular telephone of claim 5 or claim 6, wherein said infrared transceiver comprises:
a universal asynchronous receiver uART (188) coupled to said processor (184);
a crystal SIR (190) coupling receive and transmit light emitting diodes LEDs (192) to uART (188);
a power manager (194) coupled to said LEDs (192); and
transceiver TX/R beta analog circuits (196) coupled to said LEDs (192).

13. The cellular telephone of claim 5 or claim 6, wherein said interface (200) coupling said processor (184) to said proprietary connector (206; 212) is digital-to-analog.

14. The cellular telephone of claim 5 or claim 6, wherein said interface (200) coupling said processor (184) to said proprietary connector (206; 212) is digital-to-digital.

## Patentansprüche

1. Batteriepack-Modul für ein Telephon, das ein Batteriepack (210) und eine Infrarotschnittstelle (172), die mit dem Batteriepack (210) gekoppelt ist, umfaßt, wobei die Infrarotschnittstelle (172) umfaßt: einen Infrarot-Sender/Empfänger, einen Prozessor (184), der mit dem Infrarot-Sender/Empfänger gekoppelt ist, und eine Schnittstelle (200), die einen herstellerspezifischen Verbinder (212) mit dem Prozessor (184) koppelt.

2. Batteriepack-Modul nach Anspruch 1, bei dem die Schnittstelle (200), die den Prozessor (184) mit dem herstellerspezifischen Verbinder (212) koppelt, digital/analog ist.

3. Batteriepack-Modul nach Anspruch 1, bei dem die Schnittstelle (200), die den Prozessor (184) mit dem herstellerspezifischen Verbinder (212) koppelt, digital/digital ist.

4. Modul für die Befestigung an einem Telephon (204), mit:
einem Infrarot-Sender/Empfänger;
einem Prozessor (184), der mit dem Infrarot-Sender/Empfänger gekoppelt ist;
einer Schnittstelle 8200), die einen herstellerspezifischen Verbinder (206) am Telephon (204) mit dem Prozessor (184) koppelt und
Mitteln (216), die das Modul (214) mit einer Energieversorgung (207) im Telephon koppeln.

5. Zellulares Telephon, das einen Hochfrequenz-Sender/Empfänger (HF-Sender/Empfänger) (36), einen mit dem Sender/Empfänger gekoppelten Mikroprozessor (58), eine mit dem Mikroprozessor gekoppelte Telephonschnittstelle (176), ein mit der Telephonschnittstelle (176) gekoppeltes Tastenfeld (178), ein Mikrophon und einen Lautsprecher (180), die mit der Telephonschnittstelle (176) gekoppelt sind, sowie ein Batteriepack-Modul (208), das mit dem zellularen Telephon (204) lösbar gekoppelt ist, umfaßt, wobei das Batteriepack-Modul ferner umfaßt: ein Batteriepack (210) und eine mit dem Batteriepack (210) gekoppelte Infrarotschnittstelle (172), wobei die Infrarotschnittstelle (172) umfaßt: einen Infrarot-Sender/Empfänger, einen mit dem Infrarot-Sender/Empfänger gekoppelten Prozessor (184) und eine Schnittstelle (200), die einen herstellerspezifischen Verbinder (212) mit dem Prozessor (184) koppelt.

6. Zellulares Telephon, das einen Hochfrequenz-Sender/Empfänger (HF-Sender/Empfänger) (36), einen mit dem Sender/Empfänger gekoppelten Mikroprozessor (58), ein Batteriepack (207), das mit dem zellularen Telephon (204) lösbar gekoppelt ist, um für den Mikroprozessor (58) Energie bereitzustellen, eine mit dem Mikroprozessor (58) gekoppelte Telephonschnittstelle (176), ein mit der Telephonschnittstelle (176) gekoppeltes Tastenfeld (178), ein Mikrophon und einen Lautsprecher (180), die mit der Telephonschnittstelle (176) gekoppelt sind, und ferner ein mit dem Telephon (204) lösbar gekoppeltes Modul umfaßt, wobei das Modul umfaßt: einen Infrarot-Sender/Empfänger, einen mit dem Infrarot-Sender/Empfänger gekoppelten Prozessor (184); eine Schnittstelle (200), die einen herstellerspezifischen Verbinder (206) am Telephon (204) mit dem Prozessor (184) koppelt; und Mittel (216), die Energie von der Batterie (207) in den Prozessor (184) einkoppeln.

7. Zellulares Telephon nach Anspruch 5, bei dem das Batteriepack (210) Energie für den Mikroprozessor (58) bereitstellt.

8. Zellulares Telephon nach Anspruch 5 oder Anspruch 6, bei dem der Prozessor (184) ein Mikroprozessor ist.

9. Zellulares Telephon nach Anspruch 8, bei dem in den Mikroprozessor (184) ein ROM und RAM eingebettet sind.

10. Zellulares Telephon nach Anspruch 8, bei dem ein ROM und ein RAM außerhalb des Mikroprozessors (194) vorgesehen sind.

11. Zellulares Telephon nach Anspruch 5 oder Anspruch 6, bei dem der Prozessor (184) ein digitaler Signalprozessor ist.

12. Zellulares Telephon nach Anspruch 5 oder Anspruch 6, bei dem der Infrarot-Sender/Empfänger umfaßt:
einen universellen asynchronen Empfänger uART (188), der mit dem Prozessor (184) gekoppelt ist;
einen Crystal-SIR (190), der lichtemittierende Empfangs- und Sendedioden (LEDs (192) mit dem uART (188) koppelt;
einen Energie-Manager (194), der mit den LEDs (192) gekoppelt ist; und
Sender/Empfänger-TX/R-Beta-Analogschaltungen (196), die mit den LEDs (192) gekoppelt sind.

13. Zellulares Telephon nach Anspruch 5 oder Anspruch 6, bei dem die Schnittstelle (200), die den Prozessor (184) mit dem herstellerspezifischen Verbinder (206; 212) koppelt, digital/analog ist.

14. Zellulares Telephon nach Anspruch 5 oder Anspruch 6, bei dem die Schnittstelle (200), die den Prozessor (184) mit dem herstellerspezifischen Verbinder (206; 212) digital/digital ist.

## Revendications

1. Module d'ensemble de batterie pour un téléphone comprenant un ensemble de batterie (210) et une interface infrarouge (172) couplée audit ensemble de batterie (210), dans lequel l'interface infrarouge (172) comprend: un émetteur/récepteur infrarouge, un processeur (184) couplé audit émetteur/récepteur infrarouge, et une interface (200) couplant un connecteur propriétaire (212) audit processeur (184).

2. Module d'ensemble de batterie selon la revendication 1, dans lequel ladite interface (200) couplant ledit processeur (184) audit connecteur propriétaire (212) est numérique-analogique.

3. Module d'ensemble de batterie selon la revendication 1, dans lequel ladite interface (200) couplant ledit processeur (184) audit connecteur propriétaire (212) est numérique-numérique.

4. Module destiné à être fixé à un téléphone (204), comprenant :
un émetteur/récepteur infrarouge ;
un processeur (184) couplé audit émetteur/récepteur infrarouge ;
une interface (200) pour coupler un connecteur propriétaire (206) sur ledit téléphone (204) audit processeur (184) ; et
des moyens (216) pour coupler le module (214) à une alimentation (207) dans ledit téléphone.

5. Téléphone cellulaire comprenant un émetteur/récepteur radiofréquence (36), un microprocesseur (58) couplé audit émetteur/récepteur, une interface de téléphone (176) couplée audit microprocesseur, un clavier (178) couplé à ladite interface de téléphone (176), un microphone et un haut-parleur (180) couplés à ladite interface de téléphone (176), et un module d'ensemble de batterie (208) couplé de manière amovible audit téléphone cellulaire (204), ledit module d'ensemble de batterie comprenant en outre : un ensemble de batterie (210) et une interface infrarouge (172) couplée audit ensemble de batterie (210), dans lequel l'interface infrarouge (172) comprend: un émetteur/récepteur infrarouge, un processeur (184) couplé audit émetteur/récepteur infrarouge, et une interface (200) couplant un connecteur propriétaire (212) audit processeur (184).

6. Téléphone cellulaire comprenant un émetteur/récepteur radiofréquence (36), un microprocesseur (58) couplé audit émetteur/récepteur, un ensemble de batterie (207) couplé de manière amovible audit téléphone cellulaire (204) pour délivrer l'énergie audit microprocesseur (58), une interface téléphonique (176) couplée audit microprocesseur, un clavier (178) couplé à ladite interface de téléphone (176), un microphone et un haut-parleur (180) couplés à ladite interface de téléphone (176), et comprenant, en outre, un module couplé de manière amovible audit téléphone (204), ledit module comprenant : un émetteur/récepteur infrarouge, un processeur (184) couplé audit émetteur/récepteur infrarouge, une interface (200) pour coupler un connecteur propriétaire (206) sur ledit téléphone (204) audit processeur (184), et des moyens (216) pour coupler l'énergie provenant de ladite batterie (207) audit processeur (184).

7. Téléphone cellulaire selon la revendication 5, dans lequel ledit ensemble de batterie (210) délivre l'énergie audit microprocesseur (58).

8. Téléphone cellulaire selon la revendication 5 ou la revendication 6, dans lequel ledit processeur (184) est un microprocesseur.

9. Téléphone cellulaire selon la revendication 8, dans lequel une mémoire morte et une mémoire vive sont intégrées dans ledit microprocesseur (184).

10. Téléphone cellulaire selon la revendication 8, dans lequel une mémoire morte et une mémoire vive sont externes audit microprocesseur (184).

11. Téléphone cellulaire selon la revendication 5 ou la revendication 6, dans lequel ledit processeur (184) est un processeur de signal numérique.

12. Téléphone cellulaire selon la revendication 5 ou la revendication 6, dans lequel ledit émetteur/récepteur infrarouge comprend :
un récepteur asynchrone universel uART (188) couplé audit processeur (184) ;
un SIR à quartz (190) couplant des diodes électroluminescentes de réception et d'émission (192) à l'uART (188) ;
un dispositif de gestion de puissance (194) couplé auxdites diodes électroluminescentes (192); et
des circuits analogiques bêta d'émetteur/récepteur TX/R (196) couplés auxdites diodes électroluminescentes (192).

13. Téléphone cellulaire selon la revendication 5 ou la revendication 6, dans lequel ladite interface (200) couplant ledit processeur (184) audit connecteur propriétaire (206 ; 212) est numérique-analogique.

14. Téléphone cellulaire selon la revendication 5 ou la revendication 6, dans lequel ladite interface (200) couplant ledit processeur (184) audit connecteur propriétaire (206 ; 212) est numérique-numérique.
